# EUROPEAN PATENT SPECIFICATION

(11) **EP 3 503 119 B1**
(45) Date of publication and mention of the grant of the patent: **07.06.2023**
(21) Application number: 17210341.8
(22) Date of filing: 22.12.2017
(51) Int. Cl.: G21C 3/04, G21C 3/18, G21C 3/20, G21C 3/60, G21C 3/62, G21C 3/64

(54) **NUCLEAR FUEL ROD COMPRISING HIGH DENSITY FUEL UNITS**
KERNBRENNSTAB MIT HOCH VERDICHTETEN BRENNSTOFFEINHEITEN
CRAYON DE COMBUSTIBLE NUCLÉAIRE COMPRENANT DES UNITÉS DE COMBUSTIBLE À HAUTE DENSITÉ

(43) Date of publication of application: 26.06.2019
(73) Proprietor: Westinghouse Electric Sweden AB, 721 63 Västerås (SE)
(72) Inventor: MIDDLEBURGH, Simon Charles, 722 33 Västerås (SE); PUIDE, Mattias, 722 20 Västerås (SE); HALLSTADIUS, Lars, 725 92 Västerås (SE)
(74) Representative: Bjerkén Hynell KB

(56) References cited:
- WO-A1-2011/143172
- US-A- 3 022 240
- US-A- 3 442 761
- US-A- 3 661 709

## Description

### THE BACKGROUND OF THE INVENTION AND PRIOR ART

The present invention relates to a fuel rod comprising a plurality of high density fuel units for a nuclear reactor according to claim 1.

The fuel for fission reactors is usually based on metal oxides such as uranium dioxide UO₂. Uranium dioxide powder may be compacted to cylindrical pellets and sintered at high temperatures to produce fuel units in the form of pellets which are stacked on each other in a cladding of a fuel rod. However, it is known to use other kinds of fuels having a higher uranium density than uranium dioxide. Such so-called high density fuels may, for example, be different kinds of metal fuels and ceramic fuels. High density fuels are able to provide more thermal energy per unit volume for a given U-235 enrichment than oxide fuels during operation. However, some high density fuels such as metal fuels and some ceramic fuels swell significantly more than oxide fuels under irradiation. Due to this fact, it is difficult to use high density fuels in conventional claddings of fuel rods.

Usually, fuel rods comprise metal claddings enclosing the fuel. The metal claddings may comprise various alloys of zirconium metal. Metal claddings are able to handle some swelling of the fuel due to their ductile properties. Unfortunately, there are several drawbacks with metal claddings. Their strength and ductility decrease with the operating time, they are susceptible to fretting wear and they lose strength rapidly as the temperature increases. An alternative to metal claddings are ceramic claddings. Ceramic claddings such as silicon carbide claddings SiC-SiC are being investigated for accident tolerant fuel cladding applications due to its high temperature strength, exceptional stability under irradiation and reduced oxidation compared to a zirconium alloy under accident conditions.

US 3,285,826 shows a fuel element for a nuclear reactor comprising a cladding enclosing annular fuel units of a fissionable ceramic material. A central opening of the annular core 1 is filled with a mechanically compressible mandril. The mandril permits the fuel to swell inwardly at the same time as it prevent dislocated fragments of the fuel from falling into the central opening. The mandril may be designed as a plurality of hollow bubbles or spheres, a plurality of rods, a rope or a mass of a ceramic foam.

US 3,022,240 relates to fuel elements for nuclear reactors and, more particularly, to a fuel element particularly adapted for use in reactors of high power density used to generated steam for the production of electricity.

### SUMMARY OF THE INVENTION

The object of the present invention is to provide a high density fuel unit having a design making it is possible to arrange a plurality of such fuel units in an elongated tubular cladding of a fuel rod in a manner such that they are able to swell and provide a higher thermal energy generation in the fuel rod than in a conventional fuel rod comprising fuel units of uranium dioxide.

This object is achieved by the fuel rod comprising a plurality of high density fuel units defined in claim 1. The high density fuel unit contains a fuel having a higher uranium density than uranium dioxide. Thus, the high density fuel unit is able to provide more thermal energy than a fuel unit of uranium oxide with the same volume. The high density fuel unit comprises an outer surface which together with an outer surface of at least one further high density fuel unit form a continuous outer circular surface to be in contact with a surrounding inner surface of the cladding in a transverse plane of the elongated cladding. Such a design of the high density fuel units ensures a good heat transfer between the high density fuel units and the surrounding cladding during operation. The high density fuel unit comprises an inner surface designed to be located at least partly at a distance from an inner surface of the at least one further high density fuel unit in said transverse plane such that an empty space is formed between the high density fuel units which is configured to receive swelling portions of the high density fuel units under irradiation. However, the existence of the empty space reduces the volume of the high density fuel units and the thermal energy generation in the fuel rod. On the other hand, the higher uranium density in the fuel increases the thermal energy generation in the fuel rod. By choosing a high density fuel having a very high uranium density and relatively low swelling properties, it is possible to provide a fuel rod with high density fuel units which is capable to generate considerably more thermal energy than a corresponding fuel rod with fuel units of uranium dioxide. A variable number of high density fuel units may be arranged in a transverse plane of the cladding. Thus, it may be two, three, four or even more high density fuel units in a transverse plane of the cladding.

According to the present invention, the high density fuel unit and at least one further high density fuel unit in said transverse plane have an identical design. The cost for manufacturing high density fuel units of the same design is lower than the cost for manufacturing high density fuel units of two or more different designs. However, it is not excluded to use high density fuel units of different designs in the cladding.

According to an embodiment of the present invention, the high density fuel unit comprises an upper surface and a lower surface which are designed such that the several high density fuel units are stackable on each other in a longitudinal direction of the cladding. The upper surface and the lower surface of the high density fuel units may be plane surfaces or surfaces with a complementary shape such they are stackable on each other without intermediate empty spaces.

According to an embodiment of the present invention, the high density fuel units contains a metallic fuel. Many metallic fuels have a significantly higher uranium density than oxide fuels but cannot survive equally high temperatures without melting. Metal fuels are normally alloyed but it is possible to use pure uranium metals. Metal fuels have a higher heat conductivity than oxide fuels. The metal fuel may be a uranium-chromium alloy. Uranium-chromium alloys has a significantly higher uranium density than oxide fuels and relatively moderate swelling properties. Consequently, a fuel rod provided with high density fuel units containing a uranium-chromium alloy is capable to generate significantly more thermal energy than a conventional fuel rod of a corresponding size.

According to an embodiment of the present invention, the high density fuel units contains a ceramic fuel. Many ceramic fuels have a higher uranium density than oxide fuels. Ceramic fuels have the advantage of high heat conductivities and melt points, but they are more prone to swelling than oxide fuels. The ceramic fuels may contain uranium silicide, uranium nitride or uranium carbide or a combination, thereof. Alternatively, the high density fuel unit contains a ceramic-metallic composite fuel.

According to an embodiment of the present invention, the high density fuel unit may be provided with a coating having the ability to be water resistant. Such a coating prevents contact between water and the fuel in the high density fuel units in the case of a cladding breach. Furthermore the high density fuel unit may be provided with a coating having the ability to facilitate sliding motions between adjacent high density fuel units. Such a coating facilitates mutual movements in contact areas between adjacent high density fuel units. The high density fuel units may be coated with uranium-silicon USi or higher Si containing U compounds such as an amorphous U₃Si have.

Thus, the invention relates to a fuel rod comprising a cladding enclosing a plurality of high density fuels units. The cladding is made of a corrosion-resistant material with low absorption cross section for thermal neutrons. The cladding may contain a metal material. A conventional metal cladding may contain a zirconium alloy or stainless steel. Alternatively, the cladding contains a ceramic material. Ceramic claddings usually have a higher temperature tolerance than metal claddings. The use of ceramic claddings could allow for power upgrades in existing nuclear reactors. Furthermore, ceramic claddings have a lower thermal neutron cross-section and a greater stiffness than zirconium alloys claddings. Preferably, the ceramic cladding contains a SiC-SiC composite.

According to the present invention, the fuel rod comprises a spacer to be arranged in said empty space between the high density fuel units in contact with an inner surface of each high density fuel unit. The existence of such a spacer ensures that the high density fuel units are maintained in a position in contact with the inner surface of the cladding when they are swelling. The spacer may be made of a porous material. In this case, the spacer is able to receive gases at the same time as it is able to maintain the high density fuel units in contact to the inner surface of the cladding. The spacer may be made of a metallic foam or a ceramic foam, for example.

### BRIEF DESCRIPTION OF THE DRAWINGS

In the following, preferred embodiments of the invention are described as examples with reference to the attached drawings, in which:
- Fig. 1: shows a perspective view of a high density fuel unit according to the invention,
- Fig. 2: shows a view from the above of the high density fuel unit in Fig. 1,
- Fig. 3: shows a transverse cross section view of a fuel rod provided with high density fuel units according to a first embodiment of the invention,
- Fig. 4: shows a longitudinal cross section view of a part of the fuel rod in Fig. 3 and
- Fig. 5: shows a transverse cross section view of a fuel rod provided with high density fuel units according to a second embodiment of the invention.

### DETAILED DESCRIPTION OF PREFERRED EMBODIMENTS OF THE INVENTION

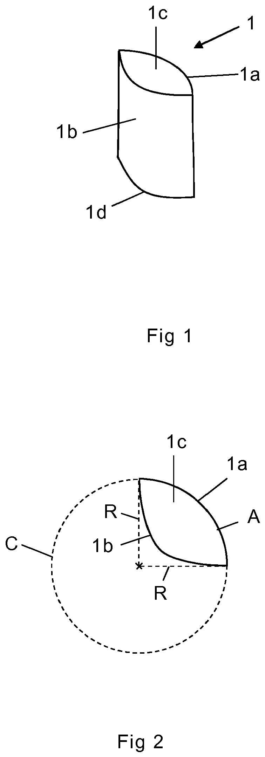

Fig 1 shows a high density fuel unit 1 for a nuclear reactor. The high density fuel unit 1 comprises a curved circular outer surface 1a and a curved inner surface 1b. The high density fuel unit 1 comprises an upper surface 1c and a lower surface 1d. The upper surface 1c and the lower surface 1d have a corresponding shape such that it is possible to stack several high density fuel unit on each other. In this case, the upper surface 1c and the lower surface 1d are plane surfaces. The high density fuel unit 1 comprises a high density fuel. A high density fuel has a higher uranium density than a conventional oxide fuel such as uranium dioxide. A high density fuel is able to provide a higher potential total thermal energy output than a conventional oxide fuel of a corresponding volume. The high density fuel may be a metal fuel. Metal fuels have the potential for high uranium density. Metal fuels are normally alloyed, but some metal fuels have been made with pure uranium metal. Uranium alloys may include aluminium, zirconium, silicon, molybdenum, chromium etc. Alternatively, the high density fuel may also be a ceramic fuel such as a uranium silicide fuel, a uranium nitride fuel or a uranium carbide fuel or a combination thereof.

Fig. 2 shows a view from the above of the high density fuel unit 1 in Fig. 1. The high density fuel unit 1 is included in a sector of a circle C having an arc side A and two straight radius sides R. The outer surface 1a of the high density fuel unit 1 has a corresponding shape as the arc side A of the circle sector. The inner surface 1b of the high density fuel unit 1 is more or less arranged in the circle sector at a distance from the straight radius sides R. In this case, the outer surface 1a of the high density fuel unit 1 takes up a quarter of the circumference of the circle C. Thus, it is possible to arrange four such high density fuel unit 1 in the circle C.

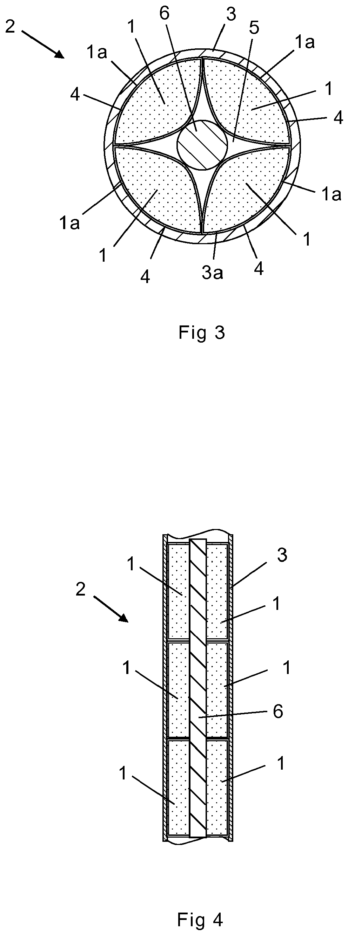

Fig. 3 shows a transverse plane of an elongated tubular cladding 3. The cladding 3 has an inner space defined by a circular inner surface 3a. The cladding 3 may be a ceramic cladding. Alternatively, the cladding is made of a metal material. A plurality of high density fuel unit 1 are arranged in the inner space of the cladding 3. Four high density fuel units 1 are arranged in the transverse plane of the cladding 3 shown in Fig. 3. The entire inner surface 3a of the cladding 3 is in contact with an outer surface 1a of one of the high density fuel unit 1.

In this case, all surfaces 1a-d of the high density fuel unit 1 are provided with a coating 4.

The coating 4 may be a water resistant material. In such a case, the coating 4 prevents water to come in direct contact with the high density fuel in the high density fuel unit 1 at a cladding break. Furthermore or in combination, the coating 4 may be a soft material permitting sliding movements of the high density fuel units 1 in relation to each other and in relation to the inner surface 3a of the cladding 3. At least a part of the inner surface 1b of each high density fuel units 1 is arranged at a distance from the inner surfaces 1b of the other high density fuel units 1. Said distances between the inner surfaces 1b of the high density fuel units 1 forms an empty space 5 between the high density fuel units 1. A positioning element 6 is arranged in the empty space 5 in contact with a part of the inner surface 1b of each high density fuel unit 1. The object of the positioning element 6 is to prevent movements of the high density fuel unit 1 from a position in which they are in contact with the inner surface 3a of the cladding 3. The positioning element 6 may be a metallic or ceramic foam.

Fig. 4 shows a part of the elongated cladding 3. The positioning element 6 is elongated and it may have a length corresponding to the high of the high density fuel units 1 which are stacked on each other in a longitudinal direction inside the cladding 3.

The high density fuel unit 1 swells under irradiation. Since the positioning element 6 prevents movements of the high density fuel units 1 from their contact position with the inner surface of the cladding 3, the high density fuel units 1 are only able to swell inwardly such that the inner surfaces 1b of the high density fuel units 1 gradually occupy the empty inner space 5. The empty space 5 is dimensioned to receive the swollen portions of the high density fuel units 1. Inevitably, the existence of the empty space 5 between the high density fuel units 1 reduces the fuel volume in the fuel rod 2. Thus, the existence of the empty space 5 results in a reduced thermal energy generation in the fuel rod 2. On the other hand, the higher uranium density in the high density fuel units 1 results in an increased thermal energy generation in the fuel rod 2. Thus, in case the higher uranium density in the high density fuel units 1 has a greater impact on the thermal energy generation than the existence of said empty space 5, a fuel rod 2 provided with high density fuel units is capable to potentially generate more thermal energy over its lifetime than a conventional fuel rod of a corresponding size.

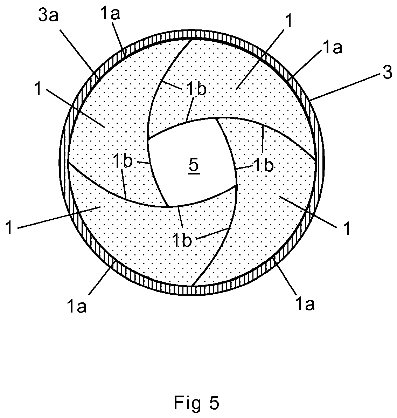

Fig. 5 shows a transverse plane of a cladding 3 enclosing high density fuel units 1 of an alternative design. Also in this case, four high density fuel units 1 are arranged in a transverse plane of the cladding 3. The high density fuel units 1 have an equal design and they comprise an outer circular surface 1a to be in contact with an inner surface 3a of the cladding 3 and an inner surface 1b to be in contact with correspondingly shaped inner surfaces 1b of adjacent high density fuel units 1. Also in this case, a part of the inner surfaces 1b of each high density fuel units 1 is located at a distance from the inner surfaces 1b of the other high density fuel units 1 such that an empty space 5 is formed between the high density fuel units 1 which is dimensioned to receive swollen portions of the high density fuel units 1. In this case, the inner surfaces 1b of the high density fuel units 1 are shaped such that each high density fuel unit 1 is kept in a position in contact with the inner surface 3a of the cladding 3 by the inner surface 1b of an adjacent high density fuel unit 1. In view of this design of the high density fuel units 1, it is possible to exclude a spacer 6 in the empty space 5.

A very suitable high density fuel is based on a uranium-chromium alloy Cr-U with γ-stabilized U. A high density fuel unit 1 containing such a high density fuel has an increased uranium density of about 75% in relation to uranium dioxide. A fuel rod 2 containing such high density fuel units 1 may have an empty space 5 of about 20% of the available fuel volume in the cladding 3. In this case, the fuel rod 1 with the high density fuel units 1 receives an increased thermal energy generation of about 40% in relation to a fuel rod of a corresponding size containing fuel units of uranium dioxide.

The present invention is not in any way restricted to the above-described embodiments on the drawings but may be modified freely within the scope of the claims.

## Claims

1. A fuel rod (2) comprising an elongated tubular cladding (3) and a plurality of high density fuel units (1) for a nuclear reactor, wherein each of said fuel units is arranged in said elongated tubular cladding (3) of said fuel rod (2), wherein the high density fuel unit (1) comprises an outer surface (1a) which together with an outer surface (1a) of at least one further high density fuel unit (1) in a transverse plane of the cladding form a continuous outer circular surface in contact with a surrounding inner surface (3a) of the cladding (3) and an inner surface (1b) designed to be located at least partly at a distance from an inner surface (1b) of the at least one further high density fuel unit (1) in said transverse plane such that an empty space (5) is formed between the high density fuel units (1) which is configured to receive swelling portions of the high density fuel units (1) under irradiation, wherein said high density fuel units (1) contain a fuel having a higher uranium density than pure uranium dioxide, and wherein the fuel rod (2) comprises a positioning element (6) arranged in said empty space (5) in contact with an inner surface of each high density fuel unit (1) in said transverse plane.

2. A fuel rod (2) according to claim 1, wherein the high density fuel unit (1) and the at least one further high density fuel unit in said transverse plane have an identical design.

3. A fuel rod (2) according to claim 1 or 2, wherein the high density fuel units (1) comprise an upper surface and a lower surface which are designed such that the plurality high density fuel units are stacked on each other in a longitudinal direction of the cladding (3).

4. A fuel rod (2) according to any preceding claim, wherein the high density fuel units (1) contain a metal fuel.

5. A fuel rod (2) according to any preceding claim, wherein the high density fuel units (1) contain a uranium-chromium alloy.

6. A fuel rod (2) according to any of claims 1-3, wherein the high density fuel units (1) contain a ceramic fuel.

7. A fuel rod (2) according to any of claims 1-3, wherein the high density fuel units (1) contain a ceramic-metallic composite fuel.

8. A fuel rod (2) according to any one of the preceding claims, wherein the high density fuel units (1) are provided with a coating (4) having the ability to be water resistant.

9. A fuel rod (2) according to any one of the preceding claims, wherein the high density fuel units (1) are provided with a coating (4) having the ability to facilitate sliding motions between adjacent high density fuel units (1).

10. A fuel rod according to any of claims 1-9, wherein the fuel rod (2) comprises a cladding (3) of a metal material.

11. A fuel rod according to any of claims 1-9, wherein the fuel rod (2) comprises a cladding (3) of a ceramic material.

12. A fuel rod according to claim 11, wherein the ceramic cladding (3) contains a SiC-SiC ceramic matrix composite.

13. A fuel rod according to any of claims 1-12, wherein the positioning element (6) is made of a metallic foam or a ceramic foam.

14. A fuel rod according to claim any of claims 1-13, wherein the positioning element (6) is elongated and has a length corresponding to the height of the high density fuel units (1) which are stacked on each other in a longitudinal direction inside the cladding (3).

## Patentansprüche

1. Brennstab (2) mit einer langgestreckten rohrförmigen Hülle (3) und einer Vielzahl von hoch verdichteten Brennstoffeinheiten (1) für einen Kernreaktor, wobei jede der Brennstoffeinheiten in der langgestreckten rohrförmigen Hülle (3) des Brennstabs (2) angeordnet ist, wobei die hoch verdichtete Brennstoffeinheit (1) Folgendes umfasst: eine äußere Oberfläche (1a), die zusammen mit einer äußeren Oberfläche (1a) von wenigstens einer weiteren hoch verdichteten Brennstoffeinheit (1) in einer Querebene der Hülle eine kontinuierliche äußere kreisförmige Oberfläche in Kontakt mit einer umgebenden inneren Oberfläche (3a) der Hülle (3) bildet, und eine innere Oberfläche (1b), die so ausgestaltet ist, dass sie in der Querebene wenigstens teilweise in einem Abstand von einer inneren Oberfläche (1b) der wenigstens einen weiteren hoch verdichteten Brennstoffeinheit (1) angeordnet ist, sodass ein Leerraum (5) zwischen den hoch verdichteten Brennstoffeinheiten (1) gebildet wird, der dafür ausgelegt ist, dass er unter Bestrahlung aufquellende Teile der hoch verdichteten Brennstoffeinheiten (1) aufnimmt, wobei die hoch verdichteten Brennstoffeinheiten (1) einen Brennstoff enthalten, der eine höhere Urandichte als reines Urandioxid aufweist, und wobei der Brennstab (2) ein Positionierungselement (6) umfasst, das in der Querebene in dem Leerraum (5) in Kontakt mit einer inneren Oberfläche jeder hoch verdichteten Brennstoffeinheit (1) angeordnet ist.

2. Brennstab (2) nach Anspruch 1, wobei die hoch verdichtete Brennstoffeinheit (1) und die wenigstens eine weitere hoch verdichtete Brennstoffeinheit in der Querebene eine identische Ausgestaltung aufweisen.

3. Brennstab (2) nach Anspruch 1 oder 2, wobei die hoch verdichteten Brennstoffeinheiten (1) eine obere Oberfläche und eine untere Oberfläche umfassen, die so ausgestaltet sind, dass die Vielzahl von hoch verdichteten Brennstoffeinheiten in einer Längsrichtung der Hülle (3) aufeinandergestapelt sind.

4. Brennstab (2) nach einem der vorhergehenden Ansprüche, wobei die hoch verdichteten Brennstoffeinheiten (1) einen metallischen Brennstoff enthalten.

5. Brennstab (2) nach einem der vorhergehenden Ansprüche, wobei die hoch verdichteten Brennstoffeinheiten (1) eine Uran-Chrom-Legierung enthalten.

6. Brennstab (2) nach einem der Ansprüche 1 bis 3, wobei die hoch verdichteten Brennstoffeinheiten (1) einen keramischen Brennstoff enthalten.

7. Brennstab (2) nach einem der Ansprüche 1 bis 3, wobei die hoch verdichteten Brennstoffeinheiten (1) einen keramisch-metallischen Verbundbrennstoff enthalten.

8. Brennstab (2) nach einem der vorhergehenden Ansprüche, wobei die hoch verdichteten Brennstoffeinheiten (1) mit einer Beschichtung (4) versehen sind, die die Fähigkeit hat, wasserbeständig zu sein.

9. Brennstab (2) nach einem der vorhergehenden Ansprüche, wobei die hoch verdichteten Brennstoffeinheiten (1) mit einer Beschichtung (4) versehen sind, die die Fähigkeit hat, Gleitbewegungen zwischen benachbarten hoch verdichteten Brennstoffeinheiten (1) zu erleichtern.

10. Brennstab nach einem der Ansprüche 1 bis 9, wobei der Brennstab (2) eine Hülle (3) aus einem Metallmaterial umfasst.

11. Brennstab nach einem der Ansprüche 1 bis 9, wobei der Brennstab (2) eine Hülle (3) aus einem keramischen Material umfasst.

12. Brennstab nach Anspruch 11, wobei die keramische Hülle (3) einen SiC-SiC-Keramikmatrix-Verbundstoff umfasst.

13. Brennstab nach einem der Ansprüche 1 bis 12, wobei das Positionierungselement (6) aus einem Metallschaum oder einem Keramikschaum hergestellt ist.

14. Brennstab nach einem der Ansprüche 1 bis 13, wobei das Positionierungselement (6) langgestreckt ist und eine Länge aufweist, die der Höhe der hoch verdichteten Brennstoffeinheiten (1) entspricht, die in einer Längsrichtung im Inneren der Hülle (3) aufeinandergestapelt sind.

## Revendications

1. Barre de combustible (2) comprenant une gaine tubulaire allongée (3) et une pluralité d'unités de combustible haute densité (1) pour un réacteur nucléaire, chacune desdites unités de combustible étant configurée pour être agencée dans ladite gaine tubulaire allongée (3) de ladite barre de combustible (2), dans laquelle l'unité de combustible haute densité (1) comprend une surface externe (1a) qui, avec une surface externe (1a) d'au moins une unité de combustible haute densité supplémentaire (1) dans un plan transversal de la gaine forme une surface circulaire externe continue en contact avec une surface interne environnante (3a) de la gaine (3) et une surface interne (1b) conçue pour être située au moins partiellement à une distance d'une surface interne (1b) de la au moins une unité de combustible haute densité supplémentaire (1) dans ledit plan transversal de sorte qu'un espace vide (5) est formé entre les unités de combustible haute densité (1), qui est configuré pour recevoir des parties gonflantes des unités de combustible haute densité (1) sous irradiation, dans laquelle lesdites unités de combustible haute densité (1) contiennent un combustible présentant une densité d'uranium supérieure à celle du dioxyde d'uranium pur, et dans laquelle la barre de combustible (2) comprend un élément de positionnement (6) agencé dans ledit espace vide (5) en contact avec une surface interne de chaque unité de combustible haute densité (1) dans ledit plan transversal.

2. Barre de combustible (2) selon la revendication 1, dans laquelle l'unité de combustible haute densité (1) et la au moins une unité de combustible haute densité supplémentaire dans ledit plan transversal présentent une conception identique.

3. Barre de combustible (2) selon la revendication 1 ou 2, dans laquelle les unités de combustible haute densité (1) comprennent une surface supérieure et une surface inférieure qui sont conçues de telle sorte que la pluralité d'unités de combustible haute densité sont empilées les unes sur les autres dans une direction longitudinale de la gaine (3).

4. Barre de combustible (2) selon l'une quelconque des revendications précédentes, dans laquelle les unités de combustible haute densité (1) contiennent un combustible métallique.

5. Barre de combustible (2) selon l'une quelconque des revendications précédentes, dans laquelle les unités de combustible haute densité (1) contiennent un alliage d'uranium et de chrome.

6. Barre de combustible (2) selon l'une quelconque des revendications 1 à 3, dans laquelle les unités de combustible haute densité (1) contiennent un combustible de céramique.

7. Barre de combustible (2) selon l'une quelconque des revendications 1 à 3, dans laquelle les unités de combustible haute densité (1) contiennent un combustible composite céramique-métallique.

8. Barre de combustible (2) selon l'une quelconque des revendications précédentes, dans laquelle les unités de combustible haute densité (1) sont pourvues d'un revêtement (4) présentant la capacité d'être résistant à l'eau.

9. Barre de combustible (2) selon l'une quelconque des revendications précédentes, dans laquelle les unités de combustible haute densité (1) sont pourvues d'un revêtement (4) présentant la capacité de faciliter des mouvements de glissement entre des unités de combustible haute densité adjacentes (1).

10. Barre de combustible selon l'une quelconque des revendications 1 à 9, dans laquelle la barre de combustible (2) comprend une gaine (3) d'un matériau métallique.

11. Barre de combustible selon l'une quelconque des revendications 1 à 9, dans laquelle la barre de combustible (2) comprend une gaine (3) d'un matériau de céramique.

12. Barre de combustible selon la revendication 11, dans laquelle la gaine de céramique (3) contient un composite à matrice de céramique SiC-SiC.

13. Barre de combustible selon l'une quelconque des revendications 1 à 12, dans laquelle l'élément de positionnement (6) est constitué d'une mousse métallique ou d'une mousse de céramique (14).

14. Barre de combustible selon l'une quelconque des revendications 1 à 13, dans laquelle l'élément de positionnement (6) est allongé et présente une longueur correspondant à la hauteur des unités de combustible haute densité (1) qui sont empilées les unes sur les autres dans une direction longitudinale à l'intérieur de la gaine (3).
